# EUROPÄISCHE PATENTANMELDUNG

(11) **EP 1 176 049 A2**
(43) Veröffentlichungstag der Anmeldung: **30.01.2002**
(21) Anmeldenummer: 01117329.1
(22) Anmeldetag: 18.07.2001
(51) Int. Cl.: B60N 2/48

(54) **Kopfstütze**

(30) Priorität: 26.07.2000 DE 10036261
(71) Anmelder: DaimlerChrysler AG, 70567 Stuttgart (DE)
(72) Erfinder: Bayer, Franz Josef, 71364 Winnenden (DE); Nohr, Matthias, Dr., 73728 Esslingen (DE)

(57) **Zusammenfassung**

Die Erfindung betrifft eine Kopfstütze eines Fahrzeugsitzes, in der zumindest ein elastisch verformbarer Behälter integriert ist und der zumindest teilweise mit Füllkörpern und Gas befüllt ist, wobei der Behälter im Crash-Fall durch schlagartiges Evakuieren des Gases als Energieabsorber wirkt.

## Beschreibung

Die Erfindung betrifft eine Kopfstütze eines Fahrzeugsitzes, die als Energieabsorber dient und deren Absorptionsvermögen während eines Unfalls, insbesondere eines Heckunfalls, schlagartig beeinflußbar ist.

Die an den Fahrzeugsitzen angeordneten Kopfstützen haben die Aufgabe, den Kopf der Fahrzeuginsassen abzufangen, wenn dieser in Folge eines Heckaufpralls nach hinten geschleudert wird. Hierbei legt der Kopf relativ zur Wirbelsäule des Körpers einen Weg zurück, der je nach Einstellung der Kopfstütze relativ zur Sitzposition der Fahrzeuginsassen unterschiedlich lang sein kann. Es versteht sich von selbst, dass die Gefahr von ernsthaften Verletzungen im Bereich der Halswirbelsäule um so größer ausgeprägt ist, je größer der von dem Kopf während des Unfalls aufgrund der Relativbewegung zurückzulegende Weg ist und je unterschiedlicher die Bewegung des Körpers und des Kopfes sind.

Dieser Gefahr wird im Stand der Technik mit einer Reihe von Lösungen begegnet.

So ist beispielsweise aus der deutschen Offenlegungsschrift DE 39 00 495 A1 eine Anordnung bekannt, bei der ein Polsterelement in die Kopfstütze integriert ist, wobei das Polsterelement entweder feder- oder pyrotechnisch angetrieben wird, wenn ein Sensor bei Auftreten eines Unfalls ein entsprechendes Auslösesignal aussendet. Das Polsterelement fährt dann in Richtung zum Kopf des Fahrzeuginsassen aus, um den möglichen Weg weitestgehend zu verringern und so den Hinterkopf abzustützen.

Weiterhin ist aus der europäischen Offenlegungsschrift EP 0 925 997 A2 eine Kopfstütze bekannt, die bei einem Heckaufprall nach vorne bewegt wird, um den nach hinten geschleuderten Kopf des Fahrzeuginsassen abzufangen. In der Rückenlehne eines Fahrzeugsitzes ist hierzu mindestens ein Reservoir angeordnet, das mit einem fließfähigen Medium gefüllt ist und mit einem in der Kopfstütze angeordneten befüllbaren Element in Verbindung steht, so dass bei einem Heckaufprall und in Abhängigkeit von dessen Stärke das fließfähige Medium durch den Oberkörper des Fahrzeuginsassen nach oben in das Element der Kopfstütze verdrängt wird, die sich dann als Folge nach vorne in Richtung zum Kopf des Insassen bewegt.

Darüber hinaus ist aus der Druckschrift DE 297 10 511 U1 eine weitere Lösung bekannt, bei der ein Gasgenerator, der optional in der Rückenlehne des Fahrzeugsitzes angeordnet werden kann, einen entsprechenden Gassack, der in der Kopfstütze integriert ist, in Abhängigkeit der Aufprallintensität mit einem bestimmten Innendruck beaufschlagen kann, um der oben genannten Verletzungsgefahr zu begegnen.

Aufgabe der vorliegenden Erfindung ist es, eine Kopfstütze bereitzustellen, die im Vergleich zu den Lösungen aus dem Stand der Technik mit verbesserten Absorptionseigenschaften aufwartet und deren Anwendung reversibel beliebig oft wiederholbar ist.

Des weiteren besteht die Aufgabe der Erfindung darin, eine Kopfstütze bereitzustellen, die sich individuell an die anatomische Kopfform jedes einzelnen Fahrzeuginsassen, jederzeit wiederholbar und veränderbar, anpassen lässt, so dass sie optimale Schutzwirkungen entfaltet und den Kopf der Fahrzeuginsassen, insbesondere während eines Heckaufpralls, zu stabilisieren vermag.

Diese Aufgabe wird erfindungsgemäß dadurch gelöst, dass zumindest ein Behälter in der Kopfstütze integriert ist, der elastisch verformbar und mit Füllkörpern befüllt ist, wobei der Behälter mit Mitteln zur schlagartigen Evakuierung des darin befindlichen Gases unter Ausbildung eines Unterdrucks bzw. Vakuums verbunden ist.

Durch das Anlegen von Unterdruck wird eine Kopfstütze als harter Energieabsorber mit guten Absorptionseigenschaften zur Verfügung gestellt. Gleichzeitig ist durch das Vakuum gewährleistet, dass die flexible Hülle des Behälters auch bei einer stoßartigen Beanspruchung, wie sie durch den Aufprall des Kopfes auftritt, ihre Form behält.

In einer vorteilhaften Ausführungsform der Erfindung ist die Kopfstütze mit einer Ventileinrichtung gekoppelt, die dafür sorgt, dass in dem Innenraum des Behälters entweder Unterdruck oder Umgebungsdruck vorherrscht. Im Normalzustand ist der Innenraum des Behälters mit Umgebungsdruck beaufschlagt, so dass die in dem Behälter befindlichen Füllkörper lose bzw. locker sind. Dadurch ist eine sehr weiche Formgiebigkeit der Kopfstütze gewährleistet, die durch den unterschiedlichen Füllgrad und unterschiedliches Füllmaterial darüber hinaus individuell einstellbar und anpassbar ist.

In kritischen Situationen steht jedoch nicht ein derartiger Komfortanspruch im Vordergrund, sondern ein möglichst effizientes Energieabsorptionsvermögen der Kopfstütze. Bei einem Heckaufprall wird der Innenraum des Behälters schlagartig mit Unterdruck oder einem annähernden Vakuum beaufschlagt, so dass sich die Füllkörper insgesamt komprimieren, wobei sich die elastische Hülle des Behälters eng an die Füllkörper anlegt und sich dadurch die Kopfstütze insgesamt verhärtet. Der anprallende Kopf wird somit früher abgefangen, da dieser nicht mehr in die Kopfstütze eintauchen kann und damit in seiner rückwärts gerichteten Kippbewegung weniger stark beschleunigt wird.

Die notwendige Vakuumhöhe hängt von der speziellen Auslegung der notwendigen Härte des kompaktierten Behälters und letztendlich von dem verwendeten Material der Füllkörper ab. Die Bereiche für den Unterdruck bzw. des Quasi-Vakuums können hierbei in einem Bereich von ca. 30-700 mbar liegen.

Führt eine kritische Situation nicht zu einem Aufprall des Kopfes auf die Kopfstütze bzw. den darin integrierten Behälter oder führt der Aufprall nicht zu einer reversiblen Veränderung des Behälters selbst, so kann dieser wieder belüftet bzw. mit Umgebungsdruck beaufschlagt werden, so dass dieser nicht unbrauchbar wird und ausgetauscht werden müsste.

Gemäß der Erfindung können unterschiedliche Prinzipien und Mittel zur Vakuum- bzw. Unterdruckerzeugung in dem Behälter zur Anwendung gebracht werden. Als Mittel lassen sich Vakuumpumpen, gegebenenfalls mit dieser gekoppelte Vakuum-Reservoirbehälter sowie Überdruckbehälter unter Anwendung des Venturiprinzips oder ähnlicher Prinzipien zum Einsatz bringen. Über eine Ventileinrichtung zwischen dem Behälter und den Vakuum erzeugenden Mitteln lassen sich die jeweiligen Druckzustände aufrechterhalten.

Die Erfindung zeichnet sich dadurch aus, dass die Mittel mit einer Pre-Crash-Sensorik gekoppelt sind, die den jeweiligen Unterdruck- bzw. Vakuumzustand nur in extremen Situationen, wie insbesondere bei einem Heckaufprall, auslöst. Dabei ist es möglich, auf eine in dem Fahrzeug vorhandene Pre-Crash-Sensorik zurückzugreifen, die bereits für andere aktive Sicherheitsmaßnahmen in dem Kraftfahrzeug zum Einsatz kommt.

Die erfindungsgemäße Kopfstütze besitzt eine Vielzahl von Variablen, die sowohl einzeln, jeweils unabhängig voneinander, als auch in ihrer Gesamtheit in konzertierter Abstimmung aufeinander eine individuelle Anpassung sowohl an die anatomischen Gegebenheiten des Fahrzeuginsassen als auch an die im Laufe eines Heckunfalls erforderlichen Absorptionseigenschaften gestatten.

So kann die Elastizität der verwendeten Füllkörper beliebig nach der im Handel angebotenen Materialienvielfalt gewählt werden. Vorteilhaft ist beispielsweise die Verwendung eines gallertartigen Materials, das bei stoßartiger Beanspruchung in sich kollabiert und dadurch einen Deformationsweg zur Verfügung stellt.

Es lassen sich aber auch nicht deformierbare, d.h. nicht energieabsorbierende Materialien als Füllkörper verwenden, wie beispielsweise partikelförmiges Schüttgut in Form von Sand oder pulverförmigen Materialien. Die inkompressiblen Sandkörner führen dazu, dass der Energieabsorber in der Form des Behälters reversibel funktioniert, solange die Hülle nicht beschädigt wird.

Weiterhin kann als Füllmaterial z.B. Polypropylen in Form von Kugeln unterschiedlicher Dichte verwendet werden, ebenso aber auch Holzmehl oder Glashohlkugeln.

Eine weitere Abstimmung lässt sich dadurch erzielen, dass der Füllgrad des Behälters unterschiedlich gewählt wird. In einer weiterhin bevorzugten Ausführungsform ist der gasdichte, elastische Behälter in mehrere Kammern unterteilt, wobei die äußere Form der Kammern bzw. des Behälters, deren Größe und das Gesamtvolumen unterschiedlich ausgestaltet werden kann, um sich optimal an die Form der Kopfstütze anzupassen.

Vorstellbar sind streifenförmige, bandförmige, plattenförmige, runde und eckige Kammern, die gemäß der Erfindung untereinander zumindest teilweise gas- und druckleitend in Verbindung stehen. Alternativ sind die Kammern auch untereinander vollständig hermetisch dicht und weisen jeweils eine separate Leitung zu den Vakuumquellen auf.

Der Behälter besteht vorzugsweise aus zwei Folien, einer formgebenden und einer ebenen Folie, die mittels Tiefziehen der Geometrie der Kopfstütze angepasst werden können. Die Folien werden miteinander verschweißt oder verklebt, wobei ein Anschluß zum Ent- und Belüften mit eingeschweißt bzw. eingeklebt wird. Als Material für die Folien kommt hier vorzugsweise Polyurethan zum Einsatz.

Weitere Vorteile und Weiterbildungen der Erfindung ergeben sich aus den Patentansprüchen, der Zeichnung und der nachfolgenden Beschreibung, in der unter Bezugnahme auf die Zeichnung ein Ausführungsbeispiel der Erfindung im Einzelnen beschrieben ist.

In der Zeichnung zeigt:
- Fig. 1: einen stark schematischen Querschnitt durch eine erfindungsgemäße Kopfstütze eines Fahrzeugsitzes im Normalzustand; und
- Fig. 2: eine schematische Darstellung eines Ausführungsbeispiels eines in der erfindungsgemäßen Kopfstütze angeordneten Behälters, der mit unterschiedlich befüllten und ausgestalteten Kammern ausgestattet ist.

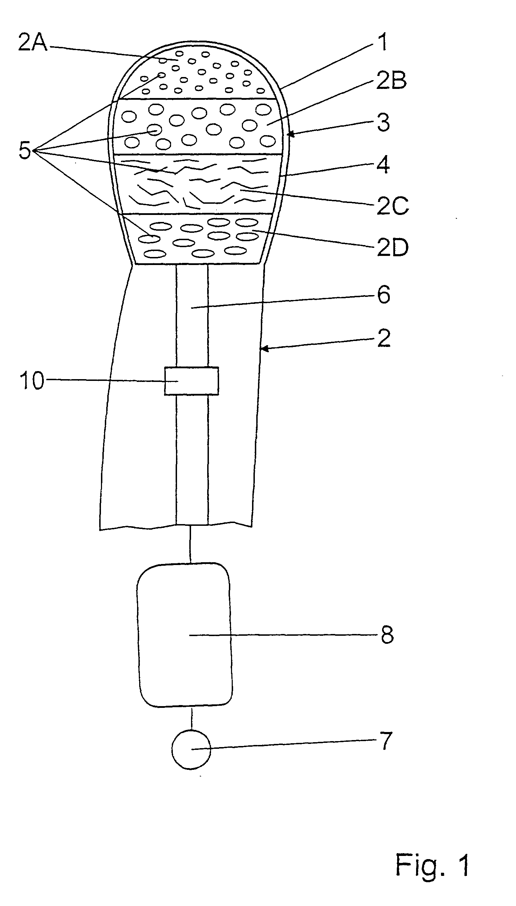

Die Fig.1 zeigt eine Kopfstütze 1, welche vorliegend in eine Rückenlehne eines Fahrzeugsitzes 2 integriert ist. Selbstverständlich bezieht sich die Erfindung aber auch auf Kopfstützen, welche ein separates Bauteil darstellen.

In der Kopfstütze 1 ist ein nahezu formäquivalenter Behälter 3 angeordnet, welcher eine elastisch verformbare Hülle 4 aufweist. Darin sind Füllkörper 5 eingeschlossen, wobei das Füllmaterial 5 im Normalzustand locker ist und eine weiche und komfortable Gestaltung der Kopfstütze 1 ermöglicht.

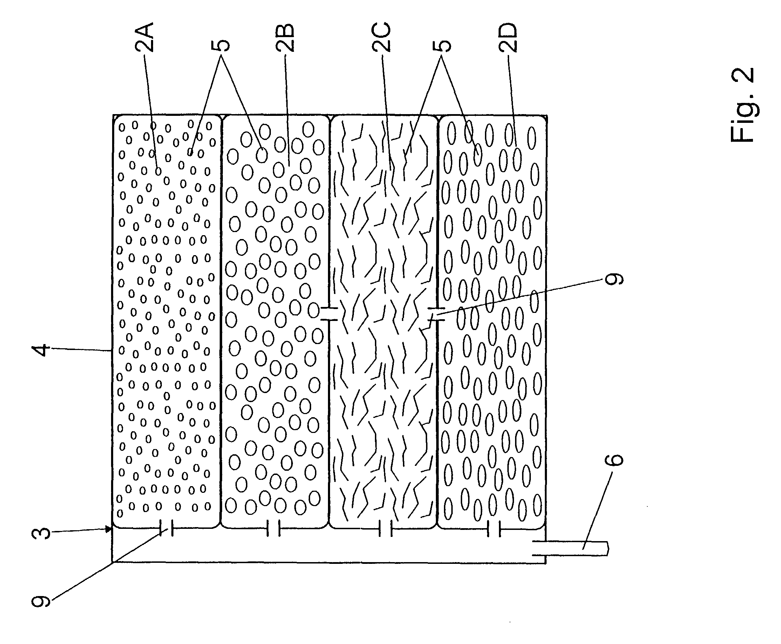

Wie auch Fig. 2 zu entnehmen ist, sind die Füllkörper 5 in dem Behälter 3 in unterschiedlichen Kammern 2A, 2B, 2C, 2D angeordnet, welche jeweils eine Art Inlay-Beutel darstellen, um ein Absacken des Füllmateriales zu verhindern und eine gleichmäßige Verteilung der Füllkörper 5, die sich hier aus unterschiedlichen Materialien zusammensetzen, zu gewährleisten. Die beutelartigen Kammern 2A, 2B, 2C und 2D sind bezüglich ihres Materials so gewählt, daß kein Füllmaterial bei einer unten näher beschriebenen Gasabsaugung entweichen kann.

Der Behälter 3 ist über eine Leitung 6 mit einer Ventileinrichtung 10, einer Vakuumpumpe 7 und einem Vakuum-Reservoirbehälter 8 verbunden, über die bei Erkennen eines Crash-Falles mittels einer üblichen Pre-Crash-Sensorik schlagartig ein Unterdruck bzw. Vakuum in dem Behälter 3 erzeugt werden kann, um eine Versteifung und Kompaktierung der Füllkörper 5 in dem Behälter 3 zu erreichen. Dabei wird mit Auslösung des Crash-Signales die Ventileinrichtung 10 geschaltet und das sich in dem Behälter 3 befindliche Gas über die Leitung 6, welche zur schnellen Vakuum-Erzielung vorzugsweise einen möglichst großen Leitungsquerschitt aufweist, in den Vakuum-Reservoirbehälter 8 gefördert, welcher in der gezeigten Ausführung innerhalb des Fahrzeugsitzes 2, nämlich im Bereich der Fahrzeugsitzrückenlehne, integriert ist.

Der Vakuum-Reservoirbehälter 8 kann jedoch in einer anderen Ausführungsform der Erfindung auch an der Unterseite des Fahrzeugsitzes 2 integriert angeordnet sein.

Als Vakuumpumpe 7 kann eine separate Pumpe oder aber auch eine bereits vorhandene Pumpe, wie z.B. eine Serienpumpe für eine Zentralverriegelung des Fahrzeugs, benutzt werden. Bei der Kombination der Vakuumpumpe 7 mit dem Vakkuum-Reservoirbehälter 8 kann die Vakuumpumpe 7 verhältnismäßig klein ausgelegt werden, wobei die Vakuumpumpe nach Erreichen des entsprechenden Druckniveaus in dem Behälter 3 abgeschaltet werden kann.

Infolge der Unterdruck- oder Vakuum-Erzeugung in dem Behälter 3 wird vorliegend die gesamte Kopfstütze 1 zur Energieabsorption und Abstützung des Kopfes verfestigt, jedoch kann es z.B. auch vorgesehen sein, daß das Vakuum räumlich nur teilweise erzeugt wird, so daß z.B. in einem inneren Bereich der Kopfstütze eine Verfestigung eintritt und ein umgebender weicher Ring verbleibt.

Die Kammern 2A, 2B, 2C und 2D sind, wie insbesondere Fig. 2 zu entnehmen ist, über entsprechende Öffnungen oder Leitungen 9 untereinander gas- und druckleitend verbunden, jedoch können sie selbstverständlich auch voneinander hermetisch dicht abgetrennt sein und jeweils mit der Leitung 6 zur Einstellung des entsprechenden Druckzustandes verbunden sein.

Die in Fig. 2 exemplarisch gezeigten Kammern 2A, 2B, 2C und 2D deuten an, daß darin jeweils unterschiedliche Füllkörper 5 mit einem unterschiedlichen Füllgrad vorgesehen sein können und daß die Anzahl der einzelnen Kammern, deren geometrische Form, die Verbindung der Kammern untereinander und die Art der Befüllung jederzeit individuell auf die gegebenen Erfordernisse abstimmbar ist, so daß sich in Verbindung mit dem Anlegen des Unterdruckes für einen Crash-Fall, z.B. bei einem Heckaufprall, die jeweils besten Absorptionseigenschaften erzielen lassen.

### Bezugszeichenliste

- 1: Kopfstütze
- 2: Fahrzeugsitz
- 3: Behälter
- 4: Hülle
- 5: Füllkörper
- 6: Leitung
- 7: Vakuumpumpe
- 8: Vakuum-Reservoirbehälter
- 9: Verbindung
- 10: Ventileinrichtung

## Patentansprüche

1. Kopfstütze (1) eines Fahrzeugsitzes, in der zumindest ein Behälter (3) mit einer elastisch verformbaren, gasdichten Hülle (4) integriert ist, der mit einem Gas und zumindest teilweise mit Füllkörpern (5) befüllt ist, wobei der Behälter (3) mit mindestens einer Leitung (6) versehen ist, die mit Mitteln (7, 8, 10) für eine schlagartige Evakuierung des Gases im Crash-Fall und für eine Wiederbefüllung mit dem Gas verbunden ist.

2. Kopfstütze nach Anspruch 1,
**dadurch gekennzeichnet,**
**daß** die Mittel (7, 8, 10) von einer Pre-Crash-Sensorik angesteuert werden.

3. Kopfstütze nach Anspruch 1,
**dadurch gekennzeichnet,**
**daß** die Mittel (7, 8, 10) für eine schlagartige Evakuierung des Gases im Crash-Fall und für eine Wiederbefüllung mit dem Gas unterhalb oder innerhalb des Fahrzeugsitzes (2), insbesondere in dessen Rückenlehne, integriert sind.

4. Kopfstütze nach Anspruch 1,
**dadurch gekennzeichnet,**
**daß** der Behälter (3) in mehrere Kammern (2A, 2B, 2C, 2D) unterteilt ist, die zumindest teilweise mit Füllkörpern (5) befüllt sind.

5. Kopfstütze nach Anspruch 4,
**dadurch gekennzeichnet,**
**daß** die Kammern (2A, 2B, 2C, 2D) untereinander hermetisch dicht oder zumindest teilweise gasleitend miteinander verbunden ausgestaltet sind.

6. Kopfstütze nach Anspruch 1,
**dadurch gekennzeichnet,**
**daß** die Füllkörper (5) aus unterschiedlichen Materialien bestehen.

7. Kopfstütze nach Anspruch 6,
**dadurch gekennzeichnet,**
**daß** die Materialien für die Füllkörper (5) deformierbare und/oder nicht deformierbare Materialien umfassen.

8. Kopfstütze nach Anspruch 1,
**dadurch gekennzeichnet,**
**daß** die Leitung (6) zumindest eine Ventileinrichtung (10) aufweist.

9. Kopfstütze nach Anspruch 1,
**dadurch gekennzeichnet,**
**daß** die Leitung (6) mit einer Vakuumpumpe (7) verbunden ist.

10. Kopfstütze nach Anspruch 9,
**dadurch gekennzeichnet,**
**daß** als Vakuumpumpe (7) die Pumpe für eine Zentralverriegelung im Kraftfahrzeug einsetzbar ist.

11. Kopfstütze nach Anspruch 1,
**dadurch gekennzeichnet,**
**daß** die Leitung (6) mit einem Vakuum-Reservoirbehälter (8) verbunden ist.

12. Kopfstütze nach Anspruch 1,
**dadurch gekennzeichnet,**
**daß** die Leitung (6) mit einem Überdruckbehälter verbunden ist.

13. Kopfstütze nach Anspruch 12,
**dadurch gekennzeichnet,**
**daß** die Leitung (6) eine Venturidüse aufweist.
